# EUROPÄISCHE PATENTSCHRIFT

(11) **EP 3 327 057 B1**
(45) Veröffentlichungstag und Bekanntmachung des Hinweises auf die Patenterteilung: **19.03.2025**
(21) Anmeldenummer: 16200722.3
(22) Anmeldetag: 25.11.2016
(51) Int. Cl.: C08G 18/66, C08G 18/12, C09J 175/08

(54) **POLYESTER-FREIE KASCHIERKLEBSTOFF-ZUSAMMENSETZUNG**
POLYESTER-FREE LAMINATING ADHESIVE COMPOSITION
COMPOSITION DE COLLE DE CONTRECOLLAGE SANS POLYESTER

(43) Veröffentlichungstag der Anmeldung: 30.05.2018
(73) Patentinhaber: Henkel AG & Co. KGaA, 40589 Düsseldorf (DE)
(72) Erfinder: SEEHAGEN, Ines, 41460 Neuss (DE); HÖLTGEN, Michael, 40591 Düsseldorf (DE); GARMANN, Helga, 40724 Hilden (DE); BANKMANN, Dennis, 40595 Düsseldorf (DE)

(56) Entgegenhaltungen:
- EP-A2- 1 074 597
- WO-A1-2014/184270
- WO-A1-2016/001265
- WO-A2-2014/031846

## Beschreibung

Die vorliegende Erfindung betrifft einen 2-Komponenten-Polyurethan-Klebstoff, zum Kaschieren von Folien, wie im angehängten Anspruch 1 definiert, wobei der PU-Klebstoff, bezogen auf das Gesamtgewicht der Kaschierklebstoff-Zusammensetzung, (a) als Harzkomponente mindestens ein NCO-terminiertes Polyurethanpräpolymer mit einem Gehalt, bezogen auf das Gesamtgewicht der Harzkomponente, von mindestens 40 Gew.-% Diphenylmethandiisocyanat (MDI), wobei das MDI 4,4'-Diphenylmethandiisocyanat oder eine Mischung davon mit 2,4'-Diphenylmethandiisocyanat ist, sowie 2 bis 20 Gew.-% Polyglycol und (b) als Härterkomponente eine Polyolmischung umfassend mindestens drei unterschiedliche Polyole enthält und frei ist von Polyestern. Die vorliegende Erfindung betrifft darüber hinaus die Verwendung des Klebstoffs zum Verkleben von Folien wie im angehängten Anspruch 7 definiert, Verfahren zum Herstellen von Verbundfolien wie im angehängten Anspruch 8 definiert, sowie mit dem beschriebenen Klebstoff verklebte Verbundfolien wie im angehängten Anspruch 10 definiert.

Kaschierklebstoffe sind in der Industrie allgemein bekannt. Es handelt sich dabei um lösemittelhaltige oder lösemittelfreie, vernetzende oder physikalisch abbindende Klebstoffe, die dazu dienen, dünne, flächige Substrate, wie beispielsweise Kunststofffolien, Metallfolien, Papier oder Kartonagen, miteinander zu verkleben. Dabei ist es wesentlich, dass durch die Verklebung die Flexibilität der dünnen einzelnen Lagen nur wenig vermindert, aber trotzdem eine ausreichende Haftung erzielt wird. Durch die Auswahl der einzelnen Folienlagen ist es möglich, bestimmte Eigenschaften dieser Mehrschichtfolien zu beeinflussen, insbesondere Durchlässigkeit für Wasser, andere Flüssigkeiten, Chemikalienbeständigkeit, Durchlässigkeit für Sauerstoff oder andere Gase. Aus solchen Mehrschichtfolien werden beispielsweise Verpackungen für Lebensmittel in fester, pastöser oder flüssiger Form, Kunststoffbestecke, medizinische Materialien, chemische Produkte, Kosmetika, Reinigungsmittel oder Gegenstände gefertigt. Weiterhin werden solche Laminate für technische Produkte wie beispielsweise flexible Leiter, Elektroisolationsmaterialen, Segel oder Komponenten für die Photovoltaik verwendet.

Aus den oben genannten Lebensmittelanwendungsgebieten ergibt sich, dass diese Mehrschichtfolien keine Stoffe enthalten dürfen, die aus den Verpackungen in gesundheitsschädlichen Mengen in das verpackte Gut migrieren. Es ist schließlich auch wünschenswert, dass die Mehrschichtfolien ein ansprechendes optisches Erscheinungsbild haben. Im Stand der Technik sind als Klebstoffe für solche Anwendungsgebiete insbesondere 2-Komponenten-Systeme bekannt. Diese werden vor der Anwendung gemischt und dann in Mengen von typischerweise etwa 1-5 g/m² auf eine der zu verklebenden Folien aufgetragen. Durch das Aufkaschieren der zweiten Folie auf die mit dem Klebstoff beschichtete Seite der ersten Folie lassen sich nach der Aushärtung Verbundfolien erhalten, die als Verpackungsmaterial, insbesondere für Lebensmittel aber auch für die weiteren oben genannten Anwendungen eingesetzt werden. Derartige Klebstoffsysteme sind üblicherweise transparent.

Die im Stand der Technik geläufigen Systeme bestehen aus NCO-terminierten Präpolymeren mit einer Polyether-Polyester-basierten Härterkomponente. Polyesterpolyole führen zu guter Haftung auf diversen Oberflächen, wie metallischen Schichten, insbesondere Aluminium-basierten Schichten. Ein in Polyester-haltigen Formulierungen unvermeidbarer Bestandteil sind cyclische Ester, die aus der Verpackung in die verpackten Lebensmittel migrieren können. In der Regel, aber nicht immer, sind diese unschädlich für den Menschen, können aber im menschlichen Verdauungstrakt nachgewiesen werden. Formulierungen, die frei sind von Polyesterpolyolen, sind für die Verwendung in einfachen Laminatstrukturen ohne metallische Schichten und als Verpackung für nicht-aggressive Lebensmittel wie Olivenöl vorgesehen. Für eine Erhitzung, beispielsweise im Zuge einer Pasteurisierung, sind derartige Verpackungen allerdings nicht geeignet. WO2014/031846, WO2014/184270 und WO2016/001265 offenbaren Kaschierklebstoff-Zusammensetzungen.

Es besteht weiterhin Bedarf an Klebstoffsystemen für Verbundfolien, die keine Polyester enthalten und die dennoch stabil gegenüber Hitze (beispielsweise Pasteurisierungstemperaturen von 90-95 °C über eine Dauer von 30 bis 45 Minuten) sowie aggressiven Lebensmitteln sind.

Diese Aufgabe wird gelöst durch ein 2-Komponenten-Kaschierklebstoff-System auf Polyurethanbasis, wie im beigefügten Anspruch 1 definiert.

Die hierin beschriebenen Systeme zeichnen sich durch gute Haftung auf metallischen Schichten und niedrige Viskositäten aus.

In einem ersten Aspekt betrifft die Erfindung daher eine 2-Komponenten-Kaschierklebstoff-Zusammensetzung auf Polyurethanbasis, enthaltend, bezogen auf das Gesamtgewicht der Kaschierklebstoff-Zusammensetzung,
(a) als Harzkomponente mindestens ein NCO-terminiertes Polyurethanpräpolymer mit einem Gehalt, bezogen auf das Gesamtgewicht der Harzkomponente, von mindestens 40 Gew.-% Diphenylmethandiisocyanat (MDI), wobei das MDI 4,4'-Diphenylmethandiisocyanat oder eine Mischung davon mit 2,4'-Diphenylmethandiisocyanat ist, sowie 2 bis 20 Gew.-% Polyglycol, wobei das Polyglycol Polypropylenglycol mit einem Molekulargewicht von 400 bis 700 g/mol, oder Polyethylenglycol mit einem Molekulargewicht von 400 bis 700 g/mol, ist; und
(b) als Härterkomponente eine Polyolmischung umfassend mindestens drei unterschiedliche Polyole, wie in Anspuch 1 definiert,
wobei die Kaschierklebstoff-Zusammensetzung frei ist von Polyestern.

In einem weiteren Aspekt betrifft die Erfindung ein Verfahren zur Herstellung von Verbundfolien gemäss Anspruch 8, in dem mindestens zwei gleiche oder unterschiedliche Kunststofffolien unter Verwendung einer Kaschierklebstoff-Zusammensetzung wie hierin beschreiben verklebt werden und entsprechend hergestellte Verbundfolien.

Die Erfindung erfasst auch die Verwendung gemäss Anspruch 11 derart hergestellter Verbundfolien als Verpackung, insbesondere zur Verpackung von Arznei- oder Lebensmitteln.

In noch einem weiteren Aspekt betrifft die Erfindung die Verwendung gemäss Anspruch 7 der hierin beschriebenen Kaschierklebstoff-Zusammensetzungen zum Verkleben von Folien.

Die im vorliegenden Text angegebenen Molekulargewichte beziehen sich, soweit nicht anders angegeben, auf das Zahlenmittel des Molekulargewichts (Mn). Das Molekulargewicht Mn kann auf Basis einer Endgruppenanalyse (Hydroxylzahl gemäß DIN 53240-1:2013-06), oder durch Gelpermeationschromatographie (GPC) gemäß DIN 55672-1:2007-08 mit THF als Eluent bestimmt werden. Falls nicht anders angegeben, sind die aufgeführten Molekulargewichte solche, die mittels Hydroxylzahl bestimmt wurden. Das Gewichtsmittel des Molekulargewichts Mw kann ebenfalls mittels GPC, wie oben angegeben, bestimmt werden.

"Mindestens ein", bezogen auf einen Inhaltsstoff, bezieht sich die Angabe auf die Art des Inhaltsstoffs und nicht auf die absolute Zahl der Moleküle. "Mindestens ein Polyol" bedeutet somit beispielsweise mindestens eine Art von Polyol, d.h. dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

"Ungefähr" oder "ca.", wie hierin im Zusammenhang mit einem Zahlenwert verwendet bezieht sich auf den Zahlenwert ±10 %, vorzugsweise ±5%.

"Frei von", wie hierin in Bezug auf Polyester verwendet, bedeutet, dass die entsprechende Zusammensetzung den genannten Bestandteil nicht oder nicht als bewusst zugesetzten Bestandteil enthält. Die Menge des Bestandteils in der jeweiligen Zusammensetzung ist daher vorzugsweise kleiner als 1 Gew.-%, noch bevorzugter kleiner als 0,5 Gew.-%, noch bevorzugter kleiner 0,1 Gew.-%, am meisten bevorzugt kleiner als 0,01 Gew.-% oder unterhalb der Nachweisgrenze.

Polyurethan-Klebstoffe sind allgemein bekannt. Diese werden auch zum Kaschieren von Mehrschichtfolien eingesetzt. Bei den erfindungsgemäß geeigneten Klebstoffen handelt es sich um 2-Komponenten-Polyurethan-Klebstoffe. Die Klebstoffe sind vorzugsweise flüssig. Die Klebstoffe können Lösemittel enthalten, bevorzugt sind sie jedoch frei von Lösemitteln. Die Vernetzung der erfindungsgemäßen geeigneten Polyurethan-Klebstoffe beruht auf der Umsetzung von reaktiven NCO-Gruppen mit H-aciden funktionellen Gruppen, beispielsweise OH-Gruppen, Aminogruppen oder Carboxylgruppen. Eine alternative Vernetzungsmethode besteht darin, dass die NCO-Gruppen mit Feuchtigkeit aus dem aufgetragenen Klebstoff, dem Substrat, oder der Umgebung unter Bildung von Harnstoffgruppen reagieren. Diese Vernetzungsreaktionen sind bekannt, sie können auch nebeneinander ablaufen. Zur Beschleunigung solcher Reaktionen können Katalysatoren in den Klebstoff eingebracht werden, beispielsweise Amin-, Titan- oder Zinnkatalysatoren.

Es hat sich überraschenderweise gezeigt, dass sich durch die hierin beschriebenen polyesterfreien 2-Komponenten (2K) -Formulierungen die Verbundhaftung ausgewählter Systeme nicht abnimmt, sondern in einigen Fällen sogar zunimmt. Das bedeutet, dass sich durch die hierin beschriebenen Formulierungen die Leistung der Klebstoffe verbessern lässt. Auch die mechanischen Eigenschaften können verbessert werden. So wurde gefunden, dass ein vollständiger Verzicht auf Polyester in der Klebstoff-Zusammensetzung zu niedrigen Viskositäten führt, die ein schnelles Durchlaufen der Applikationsmaschinen ermöglichen. Darüber hinaus wird die für Polyester-haltige Klebstoff-Zusammensetzungen typische Nebelbildung verhindert, die üblicherweise beim Durchlaufen Polyester-haltiger Klebstoff-Zusammensetzungen durch die Applikationsmaschine auftritt. Auch die Geschwindigkeit des Aufbaus der Verbundhaftung der wie hierin beschriebenen Formulierungen ist mit im Stand der Technik bekannten Systemen vergleichbar bzw. schneller.

Bei dem erfindungsgemäßen Klebstoff handelt es sich um einen 2-Komponenten-(2K)-Polyurethan-Klebstoff. Erfindungsgemäß enthält der Klebstoff als Harzkomponente mindestens ein NCO-terminiertes Polyurethanpräpolymer und als Härterkomponente mindestens eine Polyolmischung, wobei die Klebstoff-Zusammensetzung gemäß der vorliegenden Erfindung keine Polyester enthält.

Die Isocyanat (NCO)-terminierten PU-Präpolymere der Harzkomponente werden durch Umsetzen eines Polyols oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, insbesondere Polyetherpolyole, sein, wobei allerdings keine Polyesterpolyole eingesetzt werden, da die Klebstoff-Zusammensetzungen, wie hierin beschrieben, frei von Polyesterkomponenten sind.

Polyetherpolyole können aus einer Vielzahl von Alkoholen hergestellt werden, die eine oder mehrere, primäre oder sekundäre Alkoholgruppen enthalten. Als Starter für die Herstellung der Polyether können beispielsweise folgende Verbindungen oder Mischungen dieser Verbindungen eingesetzt werden: Wasser, Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4- Hydroxymethylcyclohexan, Bis(4-hydroxyphenyl)dimethylmethane und Sorbit. Bevorzugt werden Ethylenglykol, Propylenglykol, Glycerin und Trimethylolpropan eingesetzt, besonders bevorzugt Ethylenglykol und Propylenglykol, und in einer besonders bevorzugten Ausführungsform wird Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

Das Molekulargewicht der zur Synthese des Präpolymers verwendeten Polyole liegt vorzugsweise im Bereich von 100 bis 20000 g/mol, insbesondere 330 bis 4500 g/mol. Die mittlere Funktionalität kann im Bereich von 2 bis 4,5 liegen. Das PU-Präpolymer weist vorzugsweise ein Polyether-Rückgrat auf.

Der stöchiometrische Überschuss von Polyisocyanat im PU-Präpolymer beträgt, bezogen auf das molare Verhältnis von NCO- zu OH-Gruppen, insbesondere 1:1 bis 1,8:1, vorzugsweise 1:1 bis 1,6:1 und besonders bevorzugt 1,05:1 bis 1,5:1.

Es können die bekannten Lack- oder Klebstoff-Polyisocyanate eingesetzt werden, wobei es sich um Polyisocyanate mit zwei oder mehr Isocyanat-Gruppen handelt. Geeignete Polyisocyanate sind beispielsweise 1,5-Naphthylendiisocyanat (NDI), 2,4- oder 4,4'-Diphenylmethandiisocyanat (MDI), hydriertes MDI (H12MDI), Xylylendiisocyanat (XDI), Tetramethylxylylendiisocyanat (TMXDI), Di- und Tetraalkylendiphenylmethandiisocyanat, 4,4'-Dibenzyldiisocyanat, 1,3- oder 1,4-Phenylendiisocyanat, Toluylendiisocyanat (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), Phthalsäure-bis-isocyanatoethylester, Trimethylhexamethylendiisocyanat, 1,4-Diisocyanatobutan, 1,12-Diisocyanatododecan und Dimerfettsäurediisocyanat.

Als mindestens trifunktionelle Isocyanate geeignet sind Polyisocyanate, die durch Trimerisation oder Oligomerisation von Diisocyanaten oder durch Reaktion von Diisocyanaten mit niedermolekularen, polyfunktionellen hydroxyl- oder aminogruppenhaltigen Verbindungen entstehen. Kommerziell erhältliche Beispiele sind Trimerisierungsprodukte der Isocyanate HDI, MDI oder IPDI oder Addukte aus Diisocyanaten und niedermolekularen Triolen, wie Trimethylolpropan oder Glycerin. Weitere Beispiele sind Isocyanurate des Hexamethylendiisocyanates (HDI) und Isocyanurate des Isophorondiisocyanats (IPDI).

Es können im Prinzip aliphatische, cycloaliphatische oder aromatische Isocyanate eingesetzt werden, insbesondere sind jedoch aromatische Diisocyanate geeignet. Ein besonders bevorzugtes aromatisches Diisocyanat ist 4,4-Methylendiphenyldiisocyanat, das entweder allein oder in Mischung mit 2,4-Methylendiphenyldiisocyanat eingesetzt werden kann. Die erfindungsgemäßen PU-Klebstoffe können die Isocyanate umgesetzt als PU-Präpolymere enthalten oder sie enthalten zumindest anteilig niedermolekulare, ggf. oligomere, Isocyanate.

Aus den oben erwähnten Polyolen und den Polyisocyanaten können auf bekannte Art und Weise PU-Präpolymere hergestellt werden. Dabei kann aus den Polyolen und den Isocyanaten ein NCO-Gruppen-haltiges Präpolymer hergestellt werden. Beispiele dafür sind in der EP-A951493, EP-A1341832, EP-A 150444, EP-A 1456265, WO 2005/097861 beschrieben.

Das mindestens eine NCO-terminierte PU-Präpolymer ist vorzugsweise ein aromatisches Isocyanat-terminiertes, noch bevorzugter MDI-terminiertes Polyurethan-Präpolymer aus einem oder mehreren Polyetherpolyol(en) und einem aromatischen Diisocyanat, wie MDI.

Gemäß der vorliegenden Erfindung weist die Harzkomponente der Klebstoff-Zusammensetzung, bezogen auf das Gesamtgewicht der Harzkomponente, einen Gehalt von mindestens 40 Gew.-%

Diphenylmethandiisocyanat (MDI) sowie 2 bis 20 Gew.-% Polyglycol auf. Dabei ist das MDI 4,4'-Diphenylmethandiisocyanat oder eine Mischung davon mit 2,4'-Diphenylmethandiisocyanat. 2,2'-Diphenylmethandiisocyanat ist vorzugsweise nicht oder nur in vergleichsweise geringen Mengen, d.h. weniger als 2 Gew.-%, vorzugsweise weniger als 1 Gew.-%, bezogen auf das Gesamtgewicht der Harzkomponente enthalten.

Das Polyglycol in der Harzkomponente ist Polypropylenglycol mit einem Molekulargewicht 400 bis 700 g/mol, oder ist Polyethylenglycol mit einem Molekulargewicht von 400 bis 700 g/mol.

Die entsprechenden Präpolymere weisen üblicherweise einen NCO-Gehalt von 5-20 Gew.-% (bestimmt nach Spiegelberger, DIN EN ISO 11909:2007-05) auf und haben eine mittlere NCO-Funktionalität von 2 bis 3.

Aufgrund des eingesetzten Überschusses an Isocyanat, enthalten die NCO-terminierten PU-Präpolymere üblicherweise gewisse Mengen an Isocyanat-Monomeren, d.h. insbesondere aromatischen Polyisocyanat-Monomeren, wie beispielsweise MDI, typischerweise in Mengen von 0,1 bis 25 Gew.-% bezogen auf das Gesamtgewicht von Präpolymeren und Monomeren.

Das Molekulargewicht (Mn) des Präpolymers liegt im Bereich von 1500 g/mol bis 100 000 g/mol, insbesondere bevorzugt von 2000 g/mol bis 50 000 g/mol.

In dem erfindungsgemäßen Bindemittel-System ist neben der Harzkomponente eine Härterkomponente enthalten. Gemäß der vorliegenden Erfindung umfasst die Härterkomponente mindestens drei unterschiedliche Polyole.

Geeignete Polyole sind aliphatische und/oder aromatische Alkohole mit 2 bis 6, vorzugsweise 2 bis 4, OH-Gruppen pro Molekül. Die OH-Gruppen können sowohl primär als auch sekundär sein.

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höher funktionelle Alkohole wie beispielsweise Glycerin, Trimethylolpropan, Pentaerythrit sowie oligomere Ether der genannten Substanzen. Bevorzugt werden als Polyolkomponente Umsetzungsprodukte niedermolekularer polyfunktioneller Alkohole mit Alkylenoxiden, eingesetzt. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Weitere, im Rahmen der Erfindung gebräuchliche Polyole, entstehen durch Polymerisation von Tetrahydrofuran (Poly-THF). Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethern polymerisiert werden.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden.

Eine weitere Gruppe von Polyolen können OH-funktionelle Polyurethanpolyole, beispielsweise OHterminierte Polyurethanpräpolymere, sein.

Die Härter-Komponente enthält ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von weniger als 700 g/mol, vorzugsweise 400 bis <700 g/mol, noch bevorzugter 450 bis <700 g/mol aufweist. In einigen Ausführungsformen umfasst die Härterkomponente der erfindungsgemäßen Zusammensetzung 5 bis 90 Gew.-%, vorzugsweise 15 bis 60 Gew.-%, insbesondere 25 bis 40 Gew.-% mindestens eines solchen Triols. Gemäß einigen Ausführungsformen kann es sich bei diesem mindestens einen Triol insbesondere um ein Propylenoxid(PO)-basiertes Triol handeln, wie beispielsweise ein Glycerin- oder TMP-gestartetes Molekül an welches Propylenoxid addiert ist. Gemäß bevorzugten Ausführungsformen handelt es sich bei dem mindestens einen Triol um ein Propylenoxid-basiertes Triol mit einem Molekulargewicht M_{w} von mindestens 400, insbesondere mindestens 450 bis <700 g/mol.

Die Härter-Komponente enthält zusätzlich ein aliphatischer zwei- oder mehrwertiger, vorzugsweise 2- bis 4-wertiger, Alkohol, vorzugsweise mit einem Molekulargewicht <150 g/mol und/oder vorzugsweise mit einer Hydroxylzahl von 700-2000 mgKOH/g, bevorzugter 1200-1900 mgKOH/g. In einigen Ausführungsformen umfasst die Härterkomponente der erfindungsgemäßen Zusammensetzung 0,5 bis 10 Gew.-%, vorzugsweise 2 bis 8 Gew.-%, insbesondere 3 bis 7 Gew.-% mindestens eines solchen aliphatischen Alkohols. Gemäß einigen Ausführungsformen kann es sich bei diesem mindestens einen aliphatischen Alkohol um einen aliphatischen Alkohol ausgewählt aus der Gruppe bestehend aus Ethylenglykol, Propylenglykol, Butandiol-1,4, Pentandiol-1,5, Hexandiol-1,6, Heptandiol-1,7, Octandiol-1,8, Glycerin, Trimethylolpropan und Pentaerythrit handeln. In einigen Ausführungsformen handelt es sich bei dem mindestens einen aliphatischen Alkohol insbesondere um Trimethylolpropan.

Die Härter-Komponente enthält zusätzlich noch höhermolekulare AO-basierte Triole, die wie oben definiert sind, aber ein Molekulargewicht M_{w} von mehr als 700 g/mol, vorzugsweise >700 bis 1200 g/mol, aufweisen oder Rizinusöl. In einigen Ausführungsformen umfasst die Härterkomponente der erfindungsgemäßen Zusammensetzung 5 bis 80 Gew.-%, vorzugsweise 15 bis 70 Gew.-%, insbesondere 20 bis 65 Gew.-% an solchen Triolen oder Rizinusöl.

Die Härterkomponente enthält alle drei der vorgenannten Polyole, d.h. (1) mindestens ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von weniger als 700 g/mol, vorzugsweise 400 bis <700 g/mol, noch bevorzugter 450 bis <700 g/mol aufweist; (2) mindestens ein aliphatischer zwei- oder mehrwertiger, vorzugsweise 2- bis 4-wertiger, vorzugsweise monomerer Alkohol; und (3) mindestens ein Triol, insbesondere auf Basis von Glycerin oder Trimethylolpropan (TMP), an welches Alkylenoxid (AO), insbesondere Propylenoxid (PO), addiert ist und das ein Molekulargewicht M_{w} von mehr als 700 g/mol, vorzugsweise >700 bis 1200 g/mol, aufweist oder Rizinusöl. Derartige Triole sind als Voranol^{®} CP 755 oder CP 1055 kommerziell erhältlich (Dow Chemical).

In einigen Ausführungsformen beträgt das NCO:OH-Verhältnis von Harzkomponente zu Härterkomponente weniger als 1,4, vorzugsweise weniger als 1,3, insbesondere weniger als 1,25, noch bevorzugter 1,0 bis 1,2.

Das hierin beschriebene Bindemittel-System kann in verschiedenen Ausführungsformen ferner mindestens einen Katalysator enthalten, insbesondere ausgewählt aus Metallkatalysatoren auf Basis von Sn oder Ti oder Aminkatalysatoren. Geeignete Katalysatoren sind im Stand der Technik bekannt. Der Katalysator ist vorzugsweise in der Härterkomponente, d.h. in den erfindungsgemäß bevorzugten Systemen in der Hydroxy-funktionalisierten Komponente, enthalten.

Weiterhin können in dem erfindungsgemäßen Klebstoff die üblichen Additive enthalten sein. Bei den weiteren Bestandteilen handelt es sich beispielsweise um Harze (Tackifier), Stabilisatoren, Vernetzungsmittel oder Viskositätsregler, Pigmente, Weichmacher oder Antioxidantien.

Die erfindungsgemäßen Polyurethan-Klebstoffe sind bei Applikationstemperaturen flüssig. Es ist bevorzugt, dass die erfindungsgemäßen PU-Klebstoffe bei Raumtemperatur flüssig sind. Die hierin beschriebenen Zusammensetzungen haben, in verschiedenen Ausführungsformen, bei einer Temperatur von 40°C eine Viskosität von 500 bis 5000, insbesondere 600 bis 900 mPas, bestimmt nach DIN ISO 2555 (Brookfield-Viskosimeter RVT, Spindel Nr. 4, 25°C; 5 UpM).

Die hierin beschriebenen Klebstoffe können Lösemittel enthalten oder lösemittelfrei sein. Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

In bevorzugten Ausführungsformen sind die hierin beschriebenen Klebstoff-Zusammensetzungen jedoch im Wesentlichen frei von organischen Lösemitteln.

Die Klebstoffe werden mit üblichen Aggregaten und mit allen gängigen Auftragsverfahren auf die zu verklebenden Substrate, insbesondere Folien, aufgetragen, beispielsweise durch Sprühen, Rakeln, 3-4-Walzenauftragswerke im Falle der Anwendung eines lösemittelfreien Systems oder 2-Walzenauftragswerke im Falle der Anwendung eines lösemittelhaltigen Systems. Nach der Aufbringungen werden die zu verklebenden Substrate auf bekannte Art und Weise miteinander verklebt. Dabei ist es zweckmäßig, ggf. erhöhte Temperaturen anzuwenden, um eine bessere Applikation und schnellere Vernetzungsreaktion zu erzielen. Die erfindungsgemäßen Klebstoffe zeigen aber bereits bei Raumtemperatur oder nur gering erhöhten Temperaturen, wie 40°C, eine sehr gute Aushärtung.

Die erfindungsgemäßen Polyurethan-Klebstoffe sind insbesondere als Kaschierklebstoffe für Folien geeignet. Sie können in einem Verfahren eingesetzt werden, bei dem bekannte Folien auf Basis von Polymeren, wie PP, PE, OPA, Polyamid, PET, Polyester, Metallfolien miteinander verklebt werden. Dabei wird der erfindungsgemäße Klebstoff auf eine ggf. vorbehandelte oder bedruckte Folie aufgetragen. Die Auftragungsmenge beträgt dabei üblicherweise 1-5 g/m². Das kann bei erhöhter Temperatur stattfinden, um eine dünne und gleichmäßige Beschichtung zu erzielen. Unter Druck wird dann eine zweite Folie aus gleichem oder anderen Material aufkaschiert. Es kann erwärmt werden, der Klebstoff vernetzt und es entsteht eine Mehrschichtfolie. Diese kann ggf. auch aus mehr als zwei Schichten bestehen.

Üblicherweise werden die Folien nach der Herstellung gelagert. Während dieser Zeit ist es möglich, dass sich die erfindungsgemäßen Klebstoffe weiter vernetzen.

Durch die Verwendung der erfindungsgemäßen flüssigen oder Schmelzklebstoffe als Kaschierkleber ist es möglich, kaschierte zwei- oder Mehrschicht-Folien zu erhalten, die den hohen Anforderungen an eine Eignung für Lebensmittel- oder medizinische Verpackungen genügen.

Alle hierin im Zusammenhang mit dem PU-Klebstoff offenbarten Ausführungsformen sind natürlich auch auf die beschriebenen Verwendungen und Verfahren anwendbar und umgekehrt.

Nachfolgend soll die Erfindung an einigen exemplarischen Beispielen näher erläutert werden. Dabei sind die angegeben Mengen Gewichtsprozent, falls nicht anders angegeben.

### Beispiele

### Beispiel 1 (erfindungsgemäß)

### Harzbasis:

NCO-terminiertes MDI-Präpolymer mit einem NCO-Gehalt von 13-15 Gew.-% und einem NCO:OH-Verhältnis von 4,3:1, bestehend aus
50 Gew.-% 4,4'-Diphenylmethandiisocyanat (MDI); 15 Gew.-% Polypropylenglykol (PPG) mit Mw=400 g/mol; 25 Gew.-% Polypropylenglykol (PPG) mit Mw=1000 g/mol; 10 Gew.-% Hexan-1,6-diisocyanat (HDI) Trimer.

### Härter:

Polyolmischung mit einem OH-Wert von 210-250 mgKOH/g und einer Funktionalität f=3, bestehend aus
30 Gew.-% trifunktionellem Polypropylenglykol (PPG) mit Mw=450 g/mol; 70 Gew.-% Rizinusöl.
Mischverhältnis Harz:Härter 100:70 Gewichtsteile

### Beispiel 2 (erfindungsgemäß)

### Harzbasis:

NCO-terminiertes MDI-Präpolymer mit einem NCO-Gehalt von 13-15 Gew.-% und einem NCO:OH-Verhältnis von 4,0:1, bestehend aus
50 Gew.-% 4,4'-Diphenylmethandiisocyanat (MDI); 10 Gew.-% Polypropylenglykol (PPG) mit Mw=400 g/mol; 30 Gew.-% Polypropylenglykol (PPG) mit Mw=1000 g/mol; 10 Gew.-% Toluylendiisocyanat (TDI)-Präpolymer*.

### Härter:

Polyolmischung mit einem OH-Wert von 330-370 mgKOH/g und einer Funktionalität f=3, bestehend aus
5 Gew.-% Trimethylolpropan; 70 Gew.-% trifunktionellem Polypropylenglykol (PPG) mit Mw=450 g/mol; 25 Gew.-% Rizinusöl.

*TDI-Präpolymer: Reaktionsprodukt von 2,4'-TDI mit einem Polyetherdiol mit Mw=400...1000,entmonomerisiert.

### Mischverhältnis Harz:Härter 100:35 Gewichtsteile

### Beispiel 3 (erfindungsgemäß)

### Harzbasis:

NCO-terminiertes MDI-Präpolymer mit einem NCO-Gehalt von 12-14 Gew.-% und einem NCO:OH-Verhältnis von 3,9:1, bestehend aus
50 Gew.-% 4,4'-Diphenylmethandiisocyanat (MDI); 5 Gew.-% Polypropylenglykol (PPG) mit Mw=400 g/mol; 25 Gew.-% Polypropylenglykol (PPG) mit Mw=1000 g/mol; 10 Gew.-% Polypropylenglykol (PPG) mit Mw=2000 g/mol; 10 Gew.-% Hexan-1,6-diisocyanat (HDI) Trimer.

### Härter:

Polyolmischung mit einem OH-Wert von 330-370 mgKOH/g und einer Funktionalität f=3, bestehend aus
5 Gew.-% Trimethylolpropan; 70 Gew.-% trifunktionelles Polypropylenglykol (PPG) mit Mw=450 g/mol; 25 Gew.-% Rizinusöl.

### Mischverhältnis Harz:Härter 100:40 Gewichtsteile

### Beispiel 4 (erfindungsgemäß)

### Harzbasis:

NCO-terminiertes MDI-Präpolymer mit einem NCO-Gehalt von 11-13 Gew.-% und einem NCO:OH-Verhältnis von 4,3:1, bestehend aus
55 Gew.-% 4,4'-Diphenylmethandiisocyanat (MDI); 5 Gew.-% Polypropylenglykol (PPG) mit Mw=400 g/mol; 30 Gew.-% Polypropylenglykol (PPG) mit Mw=1000 g/mol; 10 Gew.-% Polypropylenglykol (PPG) mit Mw=2000 g/mol.

### Härter:

Polyolmischung mit einem OH-Wert von 330-370 mgKOH/g und einer Funktionalität f=3, bestehend aus
5 Gew.-% Trimethylolpropan; 70 Gew.-% trifunktionellem Polypropylenglykol (PPG) mit Mw=450 g/mol; 25 Gew.-% Rizinusöl.

### Mischverhältnis Harz:Härter 100:38 Gewichtsteile

### Beispiel 5 (Vergleichsbeispiel)

### Harzbasis:

NCO-terminiertes MDI-Präpolymer mit einem NCO-Gehalt von 11-13 Gew.-% und einem NCO:OH-Verhältnis von 4,3:1, bestehend aus
50 Gew.-% 4,4'-Diphenylmethandiisocyanat (MDI); 10 Gew.-% Hexan-1,6-diisocyanat (HDI) Trimer; 20 Gew.-% Polypropylenglykol (PPG) mit Mw=1000 g/mol; 20 Gew.-% Polypropylenglykol (PPG) mit Mw=2000 g/mol.

### Härter:

Polyolmischung mit einem OH-Wert von 210-250 mgKOH/g und einer Funktionalität f=3, bestehend aus
30 Gew.-% trifunktionellem Polypropylenglykol (PPG) mit Mw=450 g/mol; 70 Gew.-% Rizinusöl.

### Mischverhältnis Harz:Härter 100:60 Gewichtsteile

### Beispiel 6 (Vergleichsbeispiel)

### Harzbasis:

NCO-terminiertes MDI-Präpolymer mit einem NCO-Gehalt von 12-14 Gew.-% und einem NCO:OH-Verhältnis von 3,4:1, bestehend aus
55 Gew.-% 4,4'-Diphenylmethandiisocyanat (MDI); 15 Gew.-% Polypropylenglykol (PPG) mit Mw=1000 g/mol; 15 Gew.-% Polypropylenglykol (PPG) mit Mw=400 g/mol; 15 Gew.-% bifunktionellem Polyester*.

### Härter:

Polyolmischung mit einem OH-Wert von 200-230 mgKOH/g und einer Funktionalität f~2,3, bestehend aus
75 Gew.-% bifunktionellem Polyester*; 22 Gew.-% Polypropylenglykol (PPG) Triol mit Mw=450 g/mol; 3 Gew.-% Trimethylolpropan.

### Mischverhältnis Harz:Härter 100:60 Gewichtsteile

*Polyester basierend auf Isophthalsäure, Adipinsäure, 1,2-Propandiol, Diethylenglykol.

### Beispiel 7 (Vergleichsbeispiel)

### Harzbasis:

NCO-terminiertes MDI-Präpolymer mit einem NCO-Gehalt von 13-15 Gew.-% und einem NCO:OH-Verhältnis von 3,7:1, bestehend aus 51 Gew.-% 4,4'-Diphenylmethandiisocyanat (MDI); 10 Gew.-% Hexan-1,6-diisocyanat (HDI) Trimer; 13 Gew.-% Polypropylenglykol (PPG) mit Mw=1000 g/mol; 13 Gew.-% Polypropylenglykol (PPG) mit Mw=400 g/mol; 13 Gew.-% bifunktionellem Polyester*.

### Härter:

Polyestermischung mit einem OH-Wert von 200-230 mgKOH/g und einer Funktionalität f~2,3, bestehend aus
75 Gew.-% bifunktionellem Polyester*; 22 Gew.-% Polypropylenglykol (PPG) Triol mit Mw=450 g/mol; 3 Gew.-% Trimethylolpropan.

*Polyester basierend auf Isophthalsäure, Adipinsäure, 1,2-Propandiol, Diethylenglykol.

### Mischverhältnis Harz:Härter 100:65 Gewichtsteile

### Verbundfolie:

Die Herstellung der Verbundfolien erfolgt beispielsweise mit Hilfe eines Laminiergeräts des Typs Super Combi 2000. Dabei wird die Klebstoffzusammensetzung in einer Menge von etwa 2 g/m² auf eine der zu verklebenden Folien (OPA bzw. metOPP) aufgetragen und diese Folie dann mit der zweiten Folie (PE bzw. OPP) unter Druck kaschiert. Der wirkende Walzendruck des Kaschierwerks entspricht dabei einer Kraft von bis zu 200 N (20 kg).

### Verbundhaftung:

Die Bestimmung der Verbundhaftung erfolgt in Anlehnung an die Norm DIN 53357 nach 14 Tagen Härtung bei Raumtemperatur mittels einer Zugprüfmaschine der Firma Instron (Instron 4301). Dazu werden Probestreifen der Verbundfolie (Probenbreite von 15 mm) zwischen Klemmbacken eingespannt und diese dann bei einer Abzugsgeschwindigkeit von 100 m/min, einem Abzugswinkel von 90° und einer Abzugslänge von 5 bis 10 cm auseinandergezogen. Es wird der Mittelwert einer Dreifachbestimmung der maximalen aufzubringenden Kraft bezogen auf die Probenbreite von 15 mm angegeben.

### Verbundmaterialien:

OPA: orientiertes Polyamid
PE: Polyethylen
PET: Polyethylenterephthalat
OPP: orientiertes Polypropylen
metOPP: metallisiertes OPP (OPP beschichtet mit Aluminium)
Al: Aluminiumfolie
CPP: Cast Polypropylen

**Tabelle 1: Experimentelle Parameter**

| | **Parameter** | **Breitester Bereich** | **Engster Bereich** |
|---|---|---|---|
| **1** | Adhäsionsspektrum: | | |
| | Bindungsstärke auf | | |
| | PET/AI/PE | >3 N/15 mm nach 14 Tagen | 3-9 N/15mm nach 14 Tagen |
| | PET...Al | > 3 N/15 mm | 3-4 N/15mm |
| | AI...PE | >2 N/15 mm | 2-6 N/15mm |
| | PET/AI/CPP | >4 N/15mm nach 14 Tagen | 4-6 N/15mm nach 14 Tagen |
| **2** | Laufzeit: | | |
| | a. Topfzeit-Kurve (Viskositätszunahme vs. Zeit) | a. Start-Misch-Viskosität <1000 mPas bei 40 °C | a. 600-900 mPas bei 40 °C |
| | | | b. V = 300-350 m/min |
| | b. Experimenteller Versuch: auf Laminationsausrüstun 9 | b. Super Combi Maschine >300 m/min ohne Nebelbildung | |
| **3** | Bindungsstärke nach thermaler Behandlung: OPA_{pr 14µ}/PE_{50µ} | >3 N/15mm ohne jede Delaminationen nach Pasteurisierung 30 min 90 °C | 3-5 N/15mm ohne jede Delamination nach Pasteurisierung 30 min 90 °C |
| **4** | Füllgut-Widerstand: Bindungsstärke auf PET/AI/PE | Schaumbad: > 1 N/15mm nach 14d/40 °C in Kammern, Olivenöl: > 2 N/15mm nach 14d/40 °C in Kammern | Schaumbad: 1-3 N/15mm |
| | | | Olivenöl: 2-5 N/15mm |

## Patentansprüche

1. 2-Komponenten-Kaschierklebstoff-Zusammensetzung auf Polyurethanbasis enthaltend, bezogen auf das Gesamtgewicht der Kaschierklebstoff-Zusammensetzung,
(a) als Harzkomponente mindestens ein NCO-terminiertes Polyurethanpräpolymer mit einem Gehalt, bezogen auf das Gesamtgewicht der Harzkomponente, von mindestens 40 Gew.-% Diphenylmethandiisocyanat (MDI), wobei das MDI 4,4'-Diphenylmethandiisocyanat oder eine Mischung davon mit 2,4'-Diphenylmethandiisocyanat ist, sowie 2 bis 20 Gew.-% Polyglycol, wobei das Polyglycol Polypropylenglycol mit einem Molekulargewicht von 400 bis 700 g/mol oder Polyethylenglycol mit einem Molekulargewicht von 400 bis 700 g/mol ist; und
(b) als Härterkomponente eine Polyolmischung umfassend mindestens drei unterschiedliche Polyole,
wobei die Kaschierklebstoff-Zusammensetzung frei ist von Polyestern,
**dadurch gekennzeichnet, dass** die Härter-Komponente enthält: (1) mindestens ein Triol, an welches Alkylenoxid (AO) addiert ist und das ein Molekulargewicht M_{w} von weniger als 700 g/mol aufweist; (2) mindestens einen aliphatischen zwei- oder mehrwertigen Alkohol; und (3) mindestens ein Triol, an welches Alkylenoxid (AO) addiert ist und das ein Molekulargewicht M_{w} von mehr als 700 g/mol aufweist oder Rizinusöl.

2. Kaschierklebstoff-Zusammensetzung nach Anspruch 1 **dadurch gekennzeichnet, dass** eines der mindestens drei unterschiedlichen Polyole der Härterkomponente ein Triol ist, an welches Alkylenoxid (AO) addiert ist und das ein Molekulargewicht M_{w} von weniger als 700 g/mol aufweist, das mit 5 bis 90 Gew.-% in der Härterkomponente enthalten ist.

3. Kaschierklebstoff-Zusammensetzung nach mindestens einem der Ansprüche 1 bis 2, **dadurch gekennzeichnet, dass** eines der mindestens drei unterschiedlichen Polyole der Härterkomponente ein aliphatischer, zwei- oder mehrwertiger Alkohol ist, der mit 0,5 bis 10 Gew.-% in der Härterkomponente enthalten ist.

4. Kaschierklebstoff-Zusammensetzung nach mindestens einem der Ansprüche 1 bis 3, **dadurch gekennzeichnet, dass** eines der mindestens drei unterschiedlichen Polyole der Härterkomponente ein Triol, an welches Alkylenoxid (AO) addiert ist und das ein Molekulargewicht M_{w} von 700 bis 1200 g/mol aufweist oder Rizinusöl ist, das mit 5 bis 80 Gew.-% in der Härterkomponente enthalten ist.

5. Kaschierklebstoff-Zusammensetzung nach einem der Ansprüche 1 bis 4, **dadurch gekennzeichnet, dass** das NCO:OH-Verhältnis von Harzkomponente zu Härterkomponente weniger als 1.4 beträgt.

6. Kaschierklebstoff-Zusammensetzung nach mindestens einem der Ansprüche 1 bis 5, **dadurch gekennzeichnet, dass**
(a) die Zusammensetzung ferner mindestens einen Katalysator enthält und/oder
(b) die Zusammensetzung bei einer Temperatur von 40°C eine Viskosität von 500 bis 5000 mPas aufweist, bestimmt gemäß DIN ISO 2555; und/oder
(c) die Zusammensetzung frei von organischen Lösungsmitteln ist.

7. Verwendung der Kaschierklebstoff-Zusammensetzung nach mindestens einem der Ansprüche 1 bis 6 zum Verkleben von Folien.

8. Verfahren zur Herstellung von Verbundfolien, **dadurch gekennzeichnet, dass** mindestens zwei gleiche oder unterschiedliche Kunststofffolien unter Verwendung einer Kaschierklebstoff-Zusammensetzung nach einem oder mehreren der Ansprüche 1 bis 6 teil- oder vollflächig verklebt werden.

9. Verfahren nach Anspruch 8, **dadurch gekennzeichnet, dass** die Kaschierklebstoffzusammensetzung in einer Menge von 1 bis 5 g/m² auf mindestens eine der zu verklebenden Oberflächen der zu verklebenden Folien aufgebracht wird.

10. Verbundfolie hergestellt nach dem Verfahren gemäß mindestens einem der Ansprüche 8 bis 9.

11. Verwendung einer Verbundfolie nach Anspruch 10 als Verpackung.

## Claims

1. A polyurethane-based 2-component laminating adhesive composition containing, based on the total weight of the laminating adhesive composition,
(a) as a resin component, at least one NCO-terminated polyurethane prepolymer having a content, based on the total weight of the resin component, of at least 40 wt.% diphenylmethane diisocyanate (MDI), the MDI being 4,4'-diphenylmethane diisocyanate or a mixture thereof with 2,4'-diphenylmethane diisocyanate, and 2 to 20 wt.% polyglycol, the polyglycol being polypropylene glycol having a molecular weight of 400 to 700 g/mol or polyethylene glycol having a molecular weight of 400 to 700 g/mol; and
(b) as a curing component, a polyol mixture comprising at least three different polyols,
the laminating adhesive composition being free of polyesters,
**characterized in that** the curing component contains: (1) at least one triol to which alkylene oxide (AO) is added and which has a molecular weight M_{w} of less than 700 g/mol; (2) at least one aliphatic di- or polyhydric alcohol; and (3) at least one triol to which alkylene oxide (AO) is added and which has a molecular weight M_{w} of more than 700 g/mol, or castor oil.

2. The laminating adhesive composition according to claim 1, **characterized in that** one of the at least three different polyols of the curing component is a triol to which alkylene oxide (AO) is added and which has a molecular weight M_{w} of less than 700 g/mol, which is contained in the curing component at 5 to 90 wt.%.

3. The laminating adhesive composition according to at least one of claims 1 to 2, **characterized in that** one of the at least three different polyols of the curing component is an aliphatic, di- or polyhydric alcohol which is contained in the curing component at 0.5 to 10 wt.%.

4. The laminating adhesive composition according to at least one of claims 1 to 3, **characterized in that** one of the at least three different polyols of the curing component is a triol to which alkylene oxide (AO) is added and which has a molecular weight M_{w} of 700 to 1200 g/mol, or is castor oil, which is contained in the curing component at 5 to 80 wt.%.

5. The laminating adhesive composition according to one of claims 1 to 4, **characterized in that** the NCO:OH ratio of resin component to curing component is less than 1.4.

6. The laminating adhesive composition according to at least one of claims 1 to 5, **characterized in that**
(a) the composition further contains at least one catalyst and/or
(b) the composition has a viscosity of 500 to 5000 mPas at a temperature of 40 °C, determined in accordance with DIN ISO 2555; and/or
(c) the composition is free of organic solvents.

7. The use of the laminating adhesive composition according to at least one of claims 1 to 6 for bonding films.

8. A method for producing composite films, **characterized in that** at least two identical or different plastics films are bonded over part or all of the surface using a laminating adhesive composition according to one or more of claims 1 to 6.

9. The method according to claim 8, **characterized in that** the laminating adhesive composition is applied to at least one of the surfaces to be adhesively bonded of the films to be adhesively bonded in an amount of 1 to 5 g/m².

10. A composite film produced by the method according to at least one of claims 8 to 9.

11. The use of a composite film according to claim 10 as packaging.

## Revendications

1. Composition adhésive de contrecollage à 2 constituants à base de polyuréthane contenant, par rapport au poids total de la composition adhésive de contrecollage,
(a) comme constituant résine, au moins un prépolymère de polyuréthane à terminaison NCO comportant une teneur, par rapport au poids total du constituant résine, d'au moins 40 % en poids de diisocyanate de diphénylméthane (MDI), dans laquelle le MDI est le 4,4'-diisocyanate de diphénylméthane ou un mélange de celui-ci avec le 2,4'-diisocyanate de diphénylméthane, et de 2 à 20 % en poids de polyglycol, dans laquelle le polyglycol est le polypropylène glycol comportant une masse moléculaire allant de 400 à 700 g/mol ou le polyéthylène glycol comportant une masse moléculaire allant de 400 à 700 g/mol ; et
(b) comme constituant durcisseur, un mélange de polyols comprenant au moins trois polyols différents,
dans laquelle la composition adhésive de contrecollage est exempte de polyesters,
**caractérisée en ce que** le constituant durcisseur contient : (1) au moins un triol auquel est ajouté de l'oxyde d'alkylène (AO) et qui présente une masse moléculaire M_{w} inférieure à 700 g/mol ; (2) au moins un alcool aliphatique, divalent ou polyvalent ; et (3) au moins un triol auquel est ajouté de l'oxyde d'alkylène (AO) et qui présente une masse moléculaire M_{w} supérieure à 700 g/mol ou de l'huile de ricin.

2. Composition adhésive de contrecollage selon la revendication 1 **caractérisée en ce que** l'un des au moins trois polyols différents du constituant durcisseur est un triol auquel est ajouté de l'oxyde d'alkylène (AO) et qui présente une masse moléculaire M_{w} inférieure à 700 g/mol et qui est contenu à raison de 5 à 90 % en poids dans le constituant durcisseur.

3. Composition adhésive de contrecollage selon au moins l'une des revendications 1 à 2, **caractérisée en ce que** l'un des au moins trois polyols différents du constituant durcisseur est un alcool aliphatique, divalent ou polyvalent, qui est contenu à raison de 0,5 à 10 % en poids dans le constituant durcisseur.

4. Composition adhésive de contrecollage selon au moins l'une des revendications 1 à 3, **caractérisée en ce que** l'un des au moins trois polyols différents du constituant durcisseur est un triol auquel est ajouté de l'oxyde d'alkylène (AO) et qui présente une masse moléculaire M_{w} allant de 700 à 1200 g/mol ou est de l'huile de ricin qui est contenue à raison de 5 à 80 % en poids dans le constituant durcisseur.

5. Composition adhésive de contrecollage selon l'une des revendications 1 à 4, **caractérisée en ce que** le rapport NCO:OH du constituant résine au constituant durcisseur est inférieur à 1,4.

6. Composition adhésive de contrecollage selon au moins l'une des revendications 1 à 5, **caractérisée en ce que**
(a) la composition contient en outre au moins un catalyseur et/ou
(b) la composition présente une viscosité allant de 500 à 5000 mPas à une température de 40 °C, déterminée conformément à la norme DIN ISO 2555 ; et/ou
(c) la composition est exempte de solvants organiques.

7. Utilisation de la composition adhésive de contrecollage selon au moins l'une des revendications 1 à 6 pour le collage de films.

8. Procédé pour la fabrication de films composites, **caractérisé en ce qu'**au moins deux films plastiques identiques ou différents sont collés sur leur surface partielle ou totale à l'aide d'une composition adhésive de contrecollage selon l'une ou plusieurs des revendications 1 à 6.

9. Procédé selon la revendication 8, **caractérisé en ce que** la composition adhésive de contrecollage est appliquée en une quantité allant de 1 à 5 g/m² sur au moins l'une des surfaces à coller des films à coller.

10. Film composite fabriqué selon le procédé conformément à au moins l'une des revendications 8 à 9.

11. Utilisation d'un film composite selon la revendication 10 comme emballage.
